# EUROPEAN PATENT SPECIFICATION

(11) **EP 2 737 928 B1**
(45) Date of publication and mention of the grant of the patent: **04.01.2017**
(21) Application number: 12817341.6
(22) Date of filing: 25.07.2012
(51) Int. Cl.: C22B 7/00, B09B 3/00

(54) **METHOD FOR PROCESSING SOLID WASTE AND APPARATUS FOR CARRYING OUT SAID METHOD**
VERFAHREN ZUR VERARBEITUNG VON FESTEM ABFALL UND VORRICHTUNG ZUR DURCHFÜHRUNG DIESES VERFAHRENS
PROCÉDÉ DE TRANSFORMATION DE DÉCHETS SOLIDES ET DISPOSITIF POUR SA MISE EN OEUVRE

(30) Priority: 26.07.2011 RU 2011131136; 26.07.2011 RU 2011131138
(43) Date of publication of application: 04.06.2014
(73) Proprietor: Obschestvo S Ogranichennoi Otvetstvennostyu "Servis Port. AG", Moscow 125466 (RU)
(72) Inventor: ARISTARKHOV, Dmitry Viktorovich, Moscow 119454 (RU)
(74) Representative: Gizinska-Schohe, Malgorzata
(86) International application number: PCT/RU2012/000608
(87) International publication number: WO 2013/015719

(56) References cited:
- BY-C1- 5 430
- FR-A1- 2 762 613
- FR-A1- 2 858 570
- RU-A- 2003 105 252
- RU-C1- 2 422 478
- US-A- 5 770 017

## Description

The invention relates to the processing industrial and communal-general waste, in particular solid waste with organic constituents, and apparatus for the processing solid waste with organic constituents, and can be used in the electrical engineering and electronics industries, in metallurgy and in other sectors. Furthermore, the invention can be used for recycling items, the consumer properties of which have been exhausted, and also for extracting nonferrous and precious metals from waste.

There is a known method for processing waste with solid organic constituents (electronics scrap), comprising feeding the reactor with waste (scrap) and steam heat-transfer medium, thermal decomposition of the scrap, discharging solid and gaseous decomposition products from the reactor, their cooling, gaseous products condensation, water steam recirculation into the reactor and burning of non-condensable gases (see Belarusian patent number 5430, IPC C08J11/04, published 30.09.2003).

From the above patent there is also known an apparatus for processing solid waste with organic constituents (electronics scrap), comprising a reactor, a stem-generator, connected to a gas-blower, a heat-exchanger connected to the gas-blower and a steam-over-heater, a device for comminuting the solid decomposition products, the accumulator of the solid decomposition products, the connection trunks with sensors and shut-off devices.

Document FR 2 762 613 A1 is also disclosing a similar method and apparatus which steps and features are listed in the preamble of independent claims 1 and 4 of the present invention.

The disadvantages of the known method is that the method has low energy efficiency, high electrical energy costs for heating the reactor and for the waste decomposition, the environmental risk caused by the possibility of the air-steam heat-transfer agent explosion, which contains combustible fuel constituents in the decomposition products, and the release of the decomposition products into the environment, as well as high losses of precious metals because of their burning (oxidation) and their release into the environment together with the gaseous products.

The disadvantage of the known apparatus is in its complicated construction caused by the necessity of maintaining a given temperature with the purpose to exclude inflaming the solid decomposition products during discharging them from the accumulator and to avoid the risk of explosion of the gas-steam mixer. Moreover, the waste processing process in the said apparatus is difficult and work consuming because of the necessity to cool down the decomposition products in several stages, whereas it demands high level energy consumption for heating the reactor and for the waste decomposition.

The technical result of the claimed method is increasing of energy efficiency, reducing of the quantity of harmful emissions into the environment, and reducing of loss of the precious metals during the processing process. Besides, the technical result of the claimed apparatus is the simplification of its construction, reducing of the energy consumption and reducing of the harmful emissions into the environment.

The said technical result of the method is achieved by that the method for processing solid waste with organic constituents, comprising feeding the waste into a reactor, thermal decomposition of the waste in the reactor in a heat-transfer medium, with one of the constituents thereof being water steam, and discharging the waste from the reactor, according to the invention, is characterized in that the thermal decomposition is carried out at a temperature of the heat-transfer agent of 450-900°C, whereas the organic constituents of the waste form gaseous decomposition products and the inorganic constituents of the waste form solid decomposition products, and, after being discharged from the reactor, the gaseous decomposition products of the organic constituents of the waste are burned, and the resulting products of their combustion are used as another constituent of the heat-transfer agent.

The obtained heat-transfer agent is a gas medium with a virtually complete absence of oxygen, which prevents combustion of the organic constituents of the waste. In such medium, organic materials (plastics, resins, etc.) are not oxidized (not burned), and they are decomposed up to compounds with lower molecular weight, which leads to destruction of fastening elements, such as electric and electronic parts, as well to removal of polymer coating from surfaces of those parts, i.e. all organic materials (coatings, resins, glues, etc.) are being disposed from waste, and only the solids containing metal, ceramics, glass, i.e. inorganic constituents, remain. Such heat-transfer agent has a high heat capacity of 2.6 kJ/kg°C, which reduces the volume of heat-transfer medium needed for its heating up to the required temperature.

The said range of the heat-transfer agent temperature is an essential feature, since when heated below 450°C, there is no decomposition of the organic constituents of the waste, for example, electrical insulation resin, and when heated above 900°C, the melting process of some metals begins, such as solder, that results in formation of fused inorganic compounds in reactor, and they cannot be discharged from the reactor.

The proportions of the water steam to the products of the combustion of the gaseous decomposition products of the organic constituents of the waste in the heat-transfer agent can be selected in a ratio of 1: (1-10), that will improve the processing process and further reduce the energy consumption for the processing.

To simplify the processing of solid decomposition products of the inorganic constituents of the waste, after being discharged from the reactor, the solid decomposition products are crushed in device for comminuting and are cooled by filtration of saturated water steam at a temperature of 100-110°C at a rate of filtration of 0.5-5.0 m/s.

The said proportions are essential features, as at a temperature below 100°C the steam condenses, that results in an appearance of condensate (water), and a portion of solid products can be dissolved in the condensate, contaminated with toxic liquid, which must be utilized. Cooling of the solid products to a temperature of above 110°C leads to the fact that during discharging from the reactor, the solid products can be oxidized, resulting in a loss of precious metals. Reduced filtration rate below 0.5 m/s leads to a sharp drop of rate of transferring heat from the solid products to the water steam, as a result a violent increase of time for the water steam filtration through the layer of solid products will be needed, and that will increase the steam consumption for the processing process, increased heat losses value, i.e. an increase of energy costs. The increasing of water steam filtration rate over than 5.0 m/s, leads to entrainment of fine fractions of the solid products, which are formed by thermal waste decomposition as a result of their cracking and mechanical destruction in the cooler. Fine fractions removed out from the cooler will be deposited on the equipment of the processing device that leads to its failure.

The water steam, after cooling of the solid waste decomposition products, can be input to the reactor, thus the portion of heat is returned to the reactor, and the air, which enters the reactor while input of waste, is removed from the reactor.

The said technical result of the apparatus is achieved by that the apparatus for processing solid waste with organic constituents, comprising a reactor, a steam generator, a device for comminuting solid decomposition products, sensors and shut-off devices, according to the invention, is characterized in that it comprises additionally a fuel-burning device, an exhaust fan, a device for burning the decomposition products of the organic constituents of the waste, and a mixer, wherein the reactor is arranged in a casing, whereas the inlet of the casing is connected to the fuel-burning device and the outlet of the casing is connected to the exhaust fan, the outlet of the reactor is connected to the inlet of the device for burning the decomposition products of the organic constituents of the waste, the inlets of the mixer are connected to the steam generator and to the device for burning the decomposition products of the organic constituents of the waste, and the outlet of the mixer is connected to the reactor and to the casing.

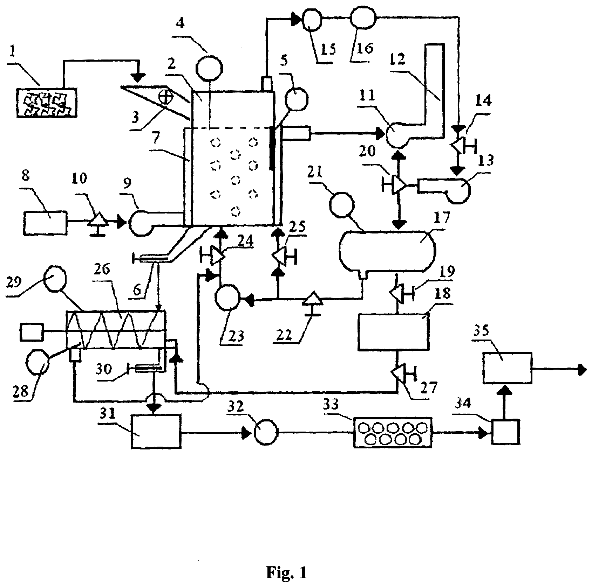

The drawing on Fig. 1 shows an apparatus for the processing solid waste with organic constituents. The apparatus is used for carrying out the claimed method.

The apparatus for waste processing comprises a waste storage tank 1, a reactor 2 with a nozzle 3 for input the waste into the reactor 2, a waste filling level sensor 4 of the reactor 2, a waste temperature sensor 5 and a solid waste outlet pipe 6 from the reactor 2. The reactor 2 is located in a casing 7. A storage capacitor 8 with fuel, such as diesel, is connected to a device 9 for burning fuel on a trunk with a shut-off device in a form of a faucet 10. An exhaust fan 11 is connected to an outlet from the reactor 2 and to an inlet into a smoke stack 12. A device 13 for burning decomposition products of the organic constituents of the waste is connected to outlet of the reactor 2 and in a trunk of their connection, there are disposed a shut-off device 14 in a form of faucet, a water steam content in a mixture sensor 15 and an organic (combustible) gas concentration sensor 16. The apparatus comprises additionally a mixer 17, and a steam generator 18. Shut-off devices in a form of faucets 19 and 20 establish preset proportions of the water steam to the combustion products in a mixture. Gas mixture temperature is monitored at indications of a temperature sensor 21. Shut-off device in a form of faucet 22 and flowmeter sensor 23 allow feeding the steam-gas mixture from the mixer 17 to the reactor 2 in a preset volume. A required volume of heat-transfer agent, supplied to the reactor, is determined by adjusting of the shut-off device in a form of a faucet 24. A required temperature of waste heating in reactor is determined by feeding the reactor 2 with a preset volume of heat-transfer agent. An abundant heat-transfer agent is supplied from the mixer 17 into the casing 7, through the shut-off device in a form of a faucet 25. A device 26 for comminuting the solid decomposition products is implemented in a form of an auger. The device 26 is fed with the saturated water steam from the steam generator 18 through the shut-off device in a form of a faucet 27, a filtration rate of the saturated steam is monitored at a sensor 28 readings, located in the device 26. A temperature sensor 29 controls cooling process in the device 26. The device 26 is provided with a nozzle tagged with a valve 30. The waste is output from the device 26 into a storage tank 31. A hammer crusher 32 is used for crushing the waste discharged from the storage tank 31. A ball mill 33 is used for further waste grinding. A screen 34 and a separator 35 are used for further processing of the well milled waste.

The method is carried out with the help of the apparatus as follows. Example of the carrying out the said method and apparatus is described at the processing of electronic waste containing wires in isolation, circuits in the polymer casing, transistors, transformers filled with polymer substance, etc.

The waste is discharged from the storage tank 1 into the reactor 2 through the nozzle 3 in a amount, for example 100 kg, providing the filling the reactor to a preset level, which is monitored at indications of the waste filling level sensor 4. Thereafter diesel fuel is discharged from the fuel storage capacitor 8 through the shut-off device in a form of faucet 10 into the device 9 for burning fuel, where it is burned, and combustion products are directed into the casing 7, wherefrom they are output by the exhaust fan 11 into the smoke stack 12. While passing through the casing 7, the combustion products heat the reactor 2 with the waste and are cooled itself. Temperature of the waste heating in the reactor 4 is controlled by the temperature sensor 5. Upon reaching a preset temperature in the waste reactor 2, for example, 270°C, the process of thermal waste decomposition into the organic and inorganic components starts. The organic constituents of the waste (rubber, plastics, glues, etc.) are decomposed with formation of the gaseous decomposition products (saturated, unsaturated and aromatic hydrocarbons), and the inorganic constituents - with solid decomposition products (ceramic, metal, glass, silicon oxide, etc.). The organic constituents of the waste are delivered through the valve 14 into the device 13 and are burned, and their combustion products are supplied to the mixer 17. Simultaneously, the water steam is supplied from the steam generator 18 into the mixer 17, and is mixed with the decomposition products of the organic constituents of the waste. Therefore, a mixture of the water steam (the one component of heat-transfer agent) and the combustion products of the gaseous decomposition products of the organic constituents (another component of heat-transfer) is used as the heat-transfer agent.

Thus obtained heat-transfer agent is heated, for example to a temperature of 455°C. The heat-transfer agent heating to the said temperature allows achieving a desired temperature of the waste heating in the reactor, e.g. 270°C, at that temperature the waste thermolysis starts, releasing the organic constituents of the waste. With the help of the valves 19 and 20, there are installed, for example, proportions of the water steam to the combustion products in a mixture at the range of 1:1, i.e. 1 kg of the water steam at a temperature of 100°C and 1 kg of the combustion products at a temperature of 1000°C. The process of water steam and combustion products mixing results in decreasing of the mixture temperature. The mixture temperature is controlled at the temperature sensor 21 indications, and its magnitude is adjusted by the valves 19 and 20, a desired temperature is achieved by changing the mixing ratio of the water steam and the combustion products. (The temperature of waste heating from 270 to 700°C can be achieved by changing the heat-transfer agent temperature from 450 to 900°C.) The steam-gas mixture, obtained in the mixer 17, through the shut-off device in a form of faucet 22 and the flowmeter sensor 23 is delivered into the reactor 2. The steam-gas mixture is filtered through a layer of wastes and gives them the heat, which is consumed for the thermal decomposition process, for temperature keeping in the reactor and for compensation of the heat loss from the reactor 2.

The temperature of wastes heating in the reactor 2 is controlled at the temperature sensor 5 indications by regulating of the heat-transfer agent volume delivered into the reactor 2 with the valve 24, and the abundant heat-transfer agent is discharged from the mixer 17 through the valve 25 into the casing 7.

The gaseous products of the organic constituents, formed by thermal decomposition, are mixed with the steam-gas mixture, and through the valve 14 are discharged from the reactor 2, and are input to the device 13, wherefrom the combustion products are input to the mixer 17. In that case, the content of the water steam in the mixture is controlled at the sensor 15 indications.

In the mixer 17 the water steam is mixed with the combustion products at a preset ratio, and the obtained mixture is delivered into the reactor 2.

During the process of thermal decomposition of the organic constituents of the waste, the volume of released gaseous products changes over time so, that it (volume of gases) increases to a maximum meaning, and then decreases down to substantially zero. The moment of cessation of gaseous products release means the end of the thermal decomposition process. The content of the gaseous decomposition products in the gas mixture output from the reactor (combustion products, water steam and decomposition products) are monitored at indications of an organic (combustible) gas concentration sensor 16. By reducing the combustible gases concentration in a mixture up to a determined meaning, process of that mixture combustion in the device 13 stops. It also confirms that process of thermal decomposition in the reactor 2 is completed.

After completion of the thermal decomposition process, the valve nozzle 6 is opened, and the solid products from the reactor 2 under its own weight are output into the device in a form of auger 26 for grinding of the solid decomposition products. After the solid products are output from the reactor 2, the valve nozzle 6 is closed. From the steam generator 18 through the valve-flowmeter 27, the saturated water steam at a temperature of 100-110°C is input to the device 26, and the rate of water steam filtration through the solid products at the range of 0.5-5.0 m/s is set, that is monitored at indications of the speed sensor 28. The solid products are intermixed in the device 26, as a result they are refined, and input of the water steam into the waste creates thermal stresses (similarly as cold heat-transfer is applied to the heated body), and under the thermal stresses the additional grinding of the solid products is provided (ceramics and glass crack and composites delaminate).

After output of the solid products, the waste is input into the reactor 2 and simultaneously the water steam is output from the device 26 and input into the reactor 2. The water steam after filtered through the solid decomposition products is heated to a temperature of 270-700°C.

The water steam, passing through the layer of waste in the reactor 4, displaces air, which enters the reactor while the waste input, thus the waste is heated. Therefore, the heat of the solid decomposition products is recycled into the reactor that reduces the energy consumption for the processing process, i.e. reducing the volume of fuel used in the device 9 for fuel burning, which reduces the emission of combustion products into the environment through the smoke stack 12.

The cooling process of the solid decomposition products in the device 26 is monitored at indications of the temperature sensor 29. And at a temperature of 100-110°C, input of the water steam into the device 26 is stopped, the nozzle tagged with the valve 30 is opened and the waste is discharged into the storage tank 31. From the storage tank 31, the solid products are input for grinding into the hammer mill 32, and then are refined in the ball mill 33, screening is carried out at the screen 34, magnetic separation at the separator 35 and further magnetic concentrate is guided onto the hydro-metallurgical processing.

## Claims

1. A method for processing solid waste with organic constituents comprising feeding the waste into a reactor (2), thermal decomposition of the waste in the reactor (2) in a heat-transfer medium, with one of the constituents thereof being water steam, and discharging the waste from the reactor (2), the thermal decomposition being carried out at a temperature of the heat-transfer medium of 450-900°C,
whereas the organic constituents of the waste form gaseous decomposition products and the inorganic constituents of the waste form solid decomposition products, and, after being discharged from the reactor, the gaseous decomposition products of the organic constituents of the waste are burned, and the products of their combustion are used as another constituent of the heat-transfer medium,
**characterized in that** the water steam , after leaving a steam generator (18), is going through a mixer (17) and also through a comminuting device (26) thereby cooling the solid decomposition products of the waste and is then supplied into the reactor (2).

2. The method for processing according to claim 1, **characterized in that** the proportions of the water steam to the products of the combustion of the gaseous decomposition products of the organic constituents of the waste in the heat-transfer medium are selected at a ratio of 1: (1-10).

3. The method for processing according to any claim 1 to 2, **characterized in that**, after being discharged from the reactor, the solid decomposition products are crushed in a device for comminuting and are cooled by filtration of saturated water steam at a temperature of 100-110°C at a rate of filtration of 0,5-5.0 m/s.

4. An apparatus for processing solid waste with organic constituents, comprising a reactor (2), a steam generator (18), a device (26) for comminuting the solid decomposition products, sensors and shut-off devices, a fuel-burning device (9), an exhaust fan (11), a device (13) for burning the decomposition products of the organic constituents of the waste, and a mixer (17), wherein the reactor (2) is arranged in a casing (7), whereas the inlet of the casing (7) is connected to the fuel-burning device (9) and the outlet of the casing (7) is connected to the exhaust fan (11), the outlet of the reactor (2) is connected to the inlet of the device (13) for burning the decomposition products of the organic constituents of the waste, the inlets of the mixer (17) are connected to the steam generator (18) and to the device (13) for burning the decomposition products of the organic constituents of the waste, and the outlet of the mixer (17) is connected to the reactor (2) and to the casing (7), and **characterized in that** the inlet of the comminuting device (26) is connected to the steam generator (18) and the outlet of the comminuting device (26) is connected to the reactor (2).

## Patentansprüche

1. Verarbeitungsverfahren von festem Abfall mit organischen Bestandteilen beinhaltend die Zuführung des Abfalls zu einem Reaktor (2), thermische Zersetzung des Abfalls im Reaktor (2) in einem Wärme-Übertragungsmedium, mit einem der Bestandteile enthaltend Wasserdampf, und Abführung des Abfalls aus dem Reaktor (2), wobei die thermische Zersetzung in einer Temperatur des Wärme-Übertragungsmediums von 450-900°C durchgeführt wird, in der die organischen Abfallbestandteile flüchtige Produkte bilden, und die anorganischen Abfallbestandteile feste Produkte bilden, und nach der Abführung aus dem Reaktor die flüchtigen Abfallbestandteile verbrannt werden und deren Verbrennungsprodukte als weitere Bestandteile des Wärme-Übertragungsmediums genutzt werden, **dadurch gekennzeichnet, dass** der Wasserdampf, nachdem er den Dampfgenerator (18) verlässt, durch einen Mixer gelangt (17) und durch eine Zerkleinerungseinrichtung (26) wobei er gleichzeitig die festen Verbrennungsbestandteile des Abfalls abkühlt und danach dem Reaktor zugeführt wird (2).

2. Verarbeitungsverfahren nach Aspruch 1, **gekennzeichnet dadurch, dass** die Verhältnisse von Wasserdampf und den Verbrennungsprodukten der flüchtigen Zersetzungsprodukte der organischen Abfallbestandteile im Wärme-Übertragungsmedium in einem Verhältnis 1: (1-10) gewählt werden.

3. Verarbeitungsverfahren nach einem der Ansprüche von 1 bis 10, **gekennzeichnet dadurch, dass** nach der Entladung vom Reaktor die festen Zersetzungsprodukte in einer Beförderungseinrichtung zerbrochen werden und durch einen gesättigten Wasserdampf mit einer Temperatur von 100-110°C und mit einer Filtrationsrate von 0,5-5,0 m/s abgefühlt werden.

4. Einrichtung zur Verarbeitung von festem Abfall mit organischen Bestanteilen, beinhaltend einen Reaktor (2), einen Dampferzeuger (18), eine Beforderungseinrichtung (26) zur Beförderung der festen Zersetzungsprodukte, Sensoren und Abschaltgeräte, eine Ptraftstoffverbrennungseinrichtung (9), einen Abzugsventilator (11), ein Gerät (13) zur Verbrennung der Zersetzungsprodukte der organischen Abfallbestandteile, einen Mixer (17), wobei der Reaktor (2) in einem Gehäuse (7) angeordnet ist, wobei der Einlass des Gehäuses (7) mit der Kraftstoffverbrennungseinrichtung (9) und der Auslass des Gehäuses (7) mit dem Abzugsventilator (11) verbunden ist, und der Auslass des Reaktors (2) mit dem Einlass des Geräts (13) zur Verbrennung der organischen Zersetzungsprodukte der organischen Abfallbestandteile verbunden ist, und die Einlässe des Mixers (17) mit der Dampferzeuger (18) und dem Gerät (13) zur Verbrennung der Zersetzungsprodukte der organischen Abfallbestandteile verbunden sind, und der Auslass des Mixers (17) mit dem Reaktor (2) und dem Gehäuse (7) verbunden ist, und **gekennzeichnet dadurch, dass** der Einlass der Beförderungseinrichtung (26) mit dem Dampferzeuger (18) verbunden ist und der Auslass der Beförderungseinrichtung (26) mit dem Reaktor (2) verbunden ist.

## Revendications

1. Un procédé de traitement de déchets solides avec des constituants organiques, comprenant alimentation des déchets dans un réacteur (2), décomposition thermique des déchets dans le réacteur (2) dans un milieu de transfert de chaleur, avec l'un des constituants de ceux-ci étant de la vapeur d'eau, et déchargement des déchets du réacteur (2), la décomposition thermique étant réalisée à une température du milieu de transfert de chaleur de 450-900°C, tandis que les constituants organiques des déchets forment des produits de décomposition gazeux et les constituants inorganiques des déchets forment des produits de décomposition solides, et, après avoir été déchargés du réacteur, les produits de décomposition gazeux des constituants organiques des déchets sont brûlés, et les produits de leur combustion sont utilisés comme un autre constituant du milieu de transfert de chaleur, **caractérisé en ce que** la vapeur d'eau après avoir quittée un générateur de vapeur (18) passe à travers un mélangeur (17) et également à travers un dispositif de broyage (26), refroidissant ainsi les produits de décomposition solides des déchets, et est ensuite amenée dans le réacteur (2).

2. Le procédé de traitement selon la revendication 1, **caractérisé en ce que** les proportions de la vapeur d'eau aux produits de la combustion des produits de décomposition gazeux des constituants organiques des déchets dans le milieu de transfert de chaleur sont sélectionnées dans un rapport de 1 : (1-10).

3. Le procédé de traitement selon l'une quelconque des revendications 1 à 2, **caractérisé en ce qu'après** avoir été déchargés du réacteur, les produits de décomposition solides sont écrasés dans un dispositif de broyage et sont refroidis par filtration de vapeur d'eau saturée, à une température de 100-110°C, à un taux de filtration de 0,5-5,0 m/s.

4. Un appareil de traitement de déchets solides avec des constituants organiques, comprenant un réacteur (2), un générateur de vapeur (18), un dispositif (26) pour broyer les produits de décomposition solides, des capteurs et des dispositifs d'arrêt, un dispositif de combustion de carburant (9), un ventilateur d'extraction (11), un dispositif (13) pour brûler les produits de décomposition des constituants organiques des déchets, et un mélangeur (17), où le réacteur (2) est disposé dans un boîtier (7) tandis que l'entrée du boîtier (7) est reliée au dispositif de combustion de carburant (9) et la sortie du boîtier (7) est reliée au ventilateur d'extraction (11), la sortie du réacteur (2) est relié à l'entrée du dispositif (13) pour brûler les produits de décomposition des constituants organiques des déchets, les entrées du mélangeur (17) sont reliées au générateur de vapeur (18) et au dispositif (13) pour brûler les produits de décomposition des constituants organiques des déchets, et la sortie du mélangeur (17) est reliée au réacteur (2) et au boîtier (7), et **caractérisé en ce que** l'entrée du dispositif de broyage (26) est reliée au générateur de vapeur (18) et la sortie du dispositif de broyage (26) est reliée au réacteur (2).
